# EUROPEAN PATENT APPLICATION

(11) **EP 2 221 094 A1**
(43) Date of publication of application: **25.08.2010**
(21) Application number: 08854687.4
(22) Date of filing: 21.10.2008
(51) Int. Cl.: B01D 27/08, B01D 29/00, B01D 29/11, B01D 35/30, C02F 11/12

(54) **FILTER UNIT AND FILTER CARTRIDGE**

(30) Priority: 29.11.2007 JP 2007308982
(71) Applicant: Entegris, Inc., Billerica, MA 01821-4600 (US)
(72) Inventor: SUZUKI, Yasuji, Tokyo 108-0073 (JP)
(74) Representative: Gambell, Derek
(86) International application number: PCT/JP2008/069016
(87) International publication number: WO 2009/069402

(57) **Abstract**

A filter unit of type in which liquid to be filtered is made to flow from a center channel through a bottom channel to a side channel. The filter unit has enhanced air removing performance, and the residual amount of the liquid is reduced by reducing the so-called hold-up volume.

[MEANS FOR SOLVING PROBLEMS]

A filter unit constructed such that liquid to be filtered, introduced into a housing (20) from an inlet (31) of a lid (30), is sent to a bottom channel (40) after being made to pass through a center channel (14) of a core member (13), sent to a side channel (41) from the bottom channel (40), filtered by being made to pass through a filter member (11) from the side channel (41) to radially inward, and then led to an outlet (32) of the lid (30) along the outer periphery of the core member. On the outer periphery of the core member (13), there are arranged a protrusion (15) and a recess (16). The protrusion (15) supports the inner periphery of the filter member (11) during filtration. The recess (16) guides the filtered liquid, having passed through the filter member (11) radially inward, toward the outlet (32). The recess (16) can be formed as a helical groove.

## Description

### TECHNICAL FIELD

The present invention relates to a filter unit and a filter cartridge, in particular to a filter unit used for filtration of organic stripping solution and pigment dispersion photoresist such as amine organic stripping solution which is used to manufacture semiconductor wafers and glass substrate for LCD, slurry and the like employed when using chemical mechanical polishing devices, and to manufacture pure water etc., as well as a filter cartridge applicable to said unit, and especially their structures.

### BACKGROUND

The filter unit consists of a filter cartridge (filter assembly), a housing (bowl) containing the filter cartridge, a housing lid (head) having an inlet for the liquid to be filtered, an outlet for filtered liquid, and a vent for exhaust. A known example of such filter cartridge consists of a filter member, which is made of a cylindrical pleated porous film, housed between radially inward and outward porous tubes, and sealed top and bottom end caps.

A type of such filter unit first introduces a liquid to be filtered from an inlet of a lid to the radially outward lateral channel of the filter cartridge, and then from here towards the center channel inside of the inward porous tube, it is filtered by being made to pass through a filter member to the radially inward side, and the filtered liquid is discharged from the center channel to an outlet. In this type of filter unit, the flow of the liquid to be filtered tends to be disrupted in the lateral channel at the bottom side of the housing. For this reason, unfiltered foreign object remains around the bottom part of the lateral channel and the efficiency of the bottom side of a filter member is lowered compared to the upper side (housing lid side).

In order to solve this problem, filter units have been developed. For example, Japanese patent application No. 2007-107074 by the present applicant is structured so that the hold-up around the bottom of the lateral channel is prevented, and moreover, the liquid to be filtered is passed through the filter member almost equally from the lateral channel to the central part outer channel, and the filtered liquid is discharged from the outlet of the lid through the central part outer channel. This is achieved by dividing a center space of a filter member into a central part inner channel of the radially inward side and a central part outer channel of the radially outward side wherein the liquid to be filtered, introduced from the inlet of the lid, is passed through the central part inner channel first, and sent from the lower end of said inner channel to the lower bottom channel of the filter cartridge inside of a housing, and then sent from the bottom channel to said lateral channel. Said central part outer channel is formed between a radially outward porous tube and a radially inward nonporous tube, and a central part inner channel is formed inside of said nonporous tube.

### DISCLOSURE OF INVENTION

### PROBLEMS TO BE SOLVED BY THE INVENTION

While the type of the filter unit mentioned above which introduces the liquid to be filtered to the center inner channel first can solve problems such as hold-up of the liquid to be filtered at the lower lateral channel and unequal use of the filter member, it has a problem that air (air bubbles) tend to remain in a liquid flow channel within the filter unit at the initial step of introducing the liquid to be filtered, and especially air bubbles tends to adhere to the peripheral of a plurality of openings (the size is decreased slightly radially inward for a release at the time of molding) of the radially outward porous tube which forms a central part outer channel because the liquid to be filtered is sent from the central part inner channel through the bottom channel, to the lateral channel, and to the central part outer channel, which results in a longer liquid flow channel compared to the type explained first (from the lateral channel to the center channel). Moreover, even if a small number of the residual air bubbles are mixed in, for example, problems may occur to semiconductor wafer etc. in making.

Also, as mentioned above, when the liquid flow channel is longer, the residual amount of the liquid within the filter unit tends to increase. Especially when the drug solution and the like to be filtered is extremely expensive and only a small amount is available in an initial development stage etc., this problem with the residual liquid becomes prominent.

An object of the present invention is to improve the air removal performance in the type of filter unit which sends the liquid to be filtered from a center channel through a bottom channel to a side channel as well as to provide a filter cartridge applicable to a filter unit or to said unit which minimizes the so-called hold-up volume to reduce the residual amount of the liquid.

### [MEANS FOR SOLVING PROBLEMS]

According to the present invention, a filter unit consisting of a filter cartridge comprising a cylindrical filter member and a cylindrical core member arranged in the center of the filter member, a housing containing a filter cartridge, and a housing lid having an inlet for liquid to be filtered and an outlet for filtered liquid is provided. The core member contains a center channel connected to the said inlet. Within the housing, a bottom channel is formed to the lower side of the filter cartridge and side channel is formed to the filter cartridge radially inward, and the liquid to be filtered, introduced from an inlet, is sent to a bottom channel after being made to pass through said center channel, sent to a side channel from the bottom channel, filtered by being made to pass through a filter member from the side channel to radially inward, and then led to an outlet along the outer periphery of the core member, wherein **characterized in that** a protrusion which supports the inner periphery of the filter member during filtration and a recess which guides the filtered liquid having passed through the filter member radially inward toward the outlet are equipped.

In the present invention, the liquid to be filtered, introduced from an inlet, is sent to a bottom channel after being made to pass through said center channel, sent to a side channel from the bottom channel, and filtered by being made to pass through a filter member to radially inward. At this point, the protrusion of the outer periphery of the core member functions to support the inner periphery of the filter member which is pressed radially inward by the liquid pressure, and the recess of the outer periphery of the core member functions to guide the filtered liquid toward the outlet of the lid. Therefore, the central part outer channel formed between the porous tube radially outward and the nonporous tube radially inward in the prior type of filter unit which introduces the liquid to be filtered to the center part inner channel first is eliminated, consequently making it unnecessary to use said porous tube which tends to produce residual air bubbles and also minimizing the holdup volume of the central part outer channel.

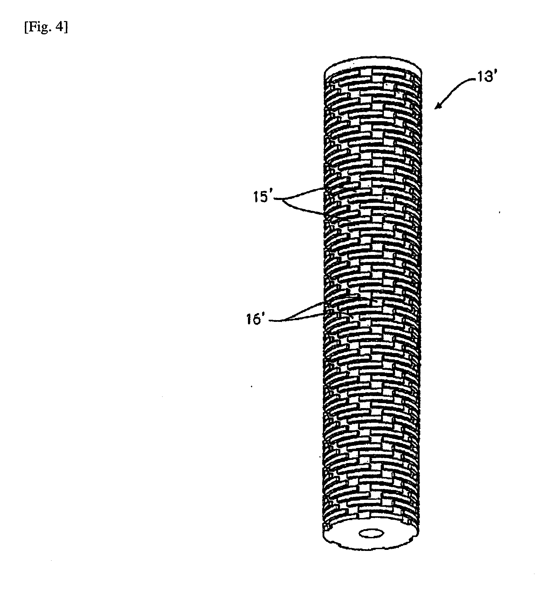

In an embodiment of the present invention, said recess forms a helical groove. This helical groove comprises a configuration wherein the groove is formed by extending the recess in a linear fashion as well as a configuration wherein each individual unit shape repeats diagonal recess such as rectangular shape to form a helical groove (see Fig. 4).

In an embodiment of the present invention, the bottom of said recess is in a shape without comers. This ensures that there are no residual air bubbles which adhere to the bottom of the recess.

In an embodiment of the present invention, the inclination angle of said helical groove against the plane perpendicular to the axis of said core member is 40 to 50 degrees. When said helical angle is less than 40 degrees, the discharge rate of the filtered liquid becomes slow and residual air bubbles may become possible. Also, when it is over 50 degrees, there is a possibility that the pleated creases of the outer periphery of the filter member may go into the grooves.

In an embodiment of the present invention, the protrusion and recess of the outer periphery of said core member are formed using a plurality of molds. The methods of forming a protrusion and recess at the outer periphery of the core member includes forming with a plurality of molds (two or four) as well as cutting the outer periphery of the core member, and it is easier to manufacture with the former method.

According to other present invention, a filter unit **characterized in that** it consists of a filter cartridge comprising a cylindrical filter member and a core member having a center channel and arranged in the center of the filter member is provided. The liquid to be filtered, introduced from the outside, is sent to radially outward of the filter member after being made to pass through the center channel, filtered by being made to pass through a filter member radially inward.
In the filter cartridge wherein this filtered liquid is guided towards the outlet along the outer periphery of the core member, a protrusion and a recess are arranged on the outer periphery of said core member. The protrusion supports the inner periphery of said filter member during filtration, and the recess guides the filtered liquid, having passed through the filter member radially inward, toward the outlet. Such filter cartridge is freely changeable for use with said filter unit relating to the present invention above.

### ADVANTAGES OF THE INVENTION

In the present invention, the central part outer channel formed between porous tube radially outward and nonporous tube radially inward used in the prior type of filter unit which introduces the liquid to be filtered to the center part inner channel first is eliminated, consequently making it unnecessary to use said porous tube which tends to produce residual air bubbles and also reducing the residual amount of the liquid by minimizing the holdup volume of the central part outer channel.

### BEST MODE FOR CARRYING OUT THE INVENTION

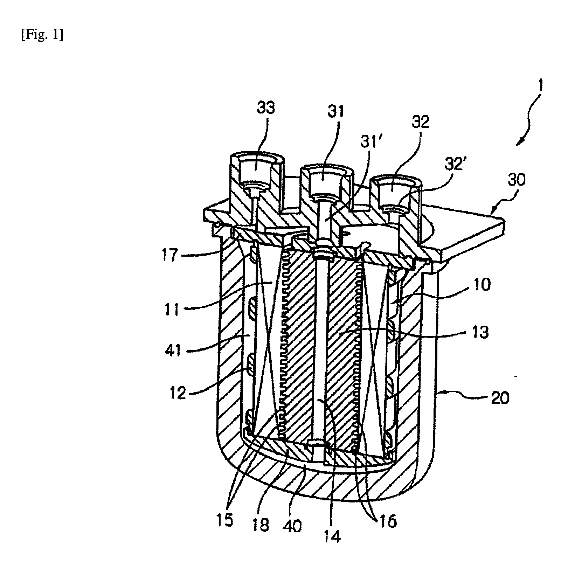

The filter unit and filter cartridge according to an embodiment of the present invention will be explained below with reference to the drawings. Fig. 1 is a longitudinal sectional perspective view of a filter unit 1. The filter unit 1 consists of a filter cartridge 10, a housing (bowl) 20 containing the filter cartridge 10, and a housing lid (head) 30. The housing lid 30 is installed with an inlet 31 for the liquid to be filtered followed by a inlet channel 31', an outlet 32 for the filtered liquid followed by an outlet channel 32', and a vent 33 for exhaust. In the filter unit 1, the lower part of the filter cartridge 10 within the housing 20 is a lower channel 40, and the radially outward of the filter cartridge 10 is a side channel 41. Also, the filter cartridge 10 is freely changeable for use with the filter unit 1.

The filter cartridge 10 consists of a filter member 11 formed of a cylindrical pleated porous film, a sleeve 12 which is a resin porous tube surrounding the periphery of the filter member 11, a cylindrical resin core member 13 arranged in the radially inward center space of the filter member 11, upper end caps 17 adhering to the upper part of the filter member 11 and core member 13, and lower end caps 18 adhering to the lower part of the filter member 11 and core member 13. The core member 13 comprises a center channel 14 along the core axis, and the parts of upper and lower end caps 17 and 18 corresponding to the central channel 14 is open as an extended part of said channel.

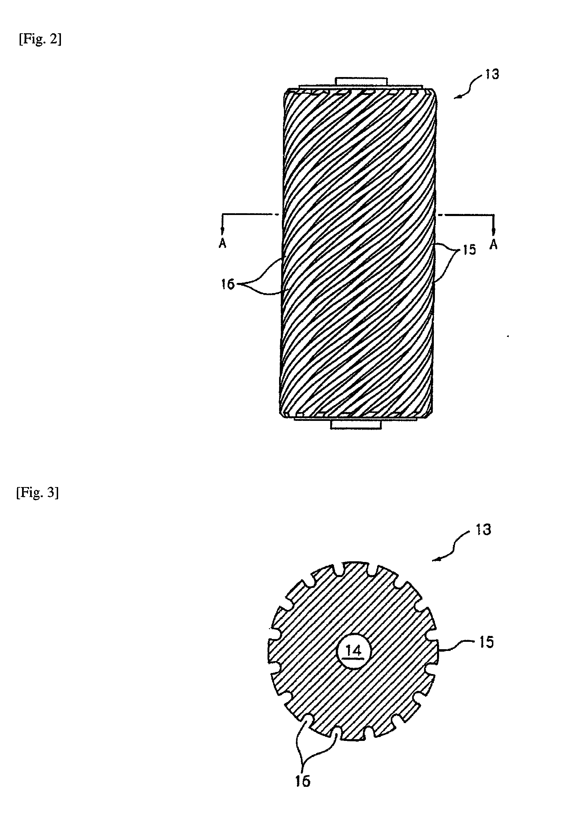

Fig. 2 and Fig. 3 is a front view and a transverse cross-sectional view of the core member 13. On the peripheral surface of the core member 13, a plurality of helical grooves 16 as recess is formed throughout, and protrusions 15 which relatively project against the grooves 16 are helically remained between the grooves. The inclination angle of the helical groove 16 against the plane perpendicular to the core axis is set at 45 degrees, and the cross section of each groove 16 is close to a hemisphere shape without corners (see Fig. 3) (The bottom of the groove 16 in Fig. 2 is illustrated as if it has corners for descriptive purposes). Also, the upper end cap 17 is partially open to correspond to the groove 16 (see Fig. 1). The groove 16 on the outer periphery of the core member 13 is formed by cutting from the outer periphery as it is difficult to release the mold when molded with a matching pair of half molds.

In the filter unit 1 above, liquid to be filtered, introduced from the lid inlet 31 to the filter unit 1, is sent to a center channel 14 through an inlet channel 31', from the center channel 14 to the bottom channel 40, and from the bottom channel 40 to the side channel 41. From here, the liquid to be filtered is filtered by being made to pass through a filter member 11 radially inward. During the filtration, the protrusion 15 outer periphery of the core member 13 supports the inner periphery of the filter member 11 which is pressed radially inward by liquid pressure. The filtered liquid flows into the groove 16 outer peripheral of the core member 13, ascending along the groove 16, and discharged from the lid outlet 32 through the outlet channel 32'.

In the filter unit explained above, air removal performance is improved by eliminating the central part outer channel formed between porous tube radially outward and nonporous tube radially inward used in the conventional filter unit, consequently making it unnecessary to use said porous tube which tends to produce residual air bubbles. Also the residual amount of the liquid is reduced by minimizing the holdup volume of the central part outer channel. Moreover, the manufacturing cost of the filter cartridge 10 is reduced because the porous tube is no longer necessary.

Fig. 4 indicates another example of the core member which is moldable with a matching pair of half molds. The outer periphery of the core member 13' comprises a plurality of protrusion 15' whose unit shape is horizontally rectangle and a recess 16' whose rectangle unit shape has a vertical length that is almost the same as that of the protrusion 15' and a horizontal length that is slightly shorter than half, and the recess 16' forms a helical grove continuously from the bottom to the top in a diagonal direction. The core member 13' can be obtained when molding the recess 16' and protrusion 15' of outer periphery, and thus it is easier to form the recess and protrusion than to form the core 13 which requires cutting.

### BRIEF DESCRIPTIONS OF THE DRAWINGS

Fig. 1 is a longitudinal sectional perspective view of a filter relating to an embodiment of the present invention.
Fig. 2 is a front view of the core member.
Fig. 3 is a cross sectional view of the core member taken along the line A-A.
Fig. 4 is a perspective view indicating another example of the core member

### DESCRIPTION OF THE SYMBOLS

- 1:: Filter unit
- 10:: Filter cartridge
- 11:: Filter member
- 12:: Sleeve
- 13, 13':: Core member
- 14:: Center channel
- 15, 15':: Protrusion
- 16,16':: Groove (recess)
- 20:: Housing
- 30:: Housing lid
- 31:: Inlet
- 32:: Outlet
- 40:: Bottom channel
- 41:: Side channel

## Claims

1. A filter unit consisting of a filter cartridge comprising cylindrical filter member and a cylindrical core member arranged in the center of the filter member, a housing containing a filter cartridge, and a housing lid having an inlet for liquid to be filtered and an outlet for filtered liquid is provided. The core member contains a center channel connected to the said inlet. Within the housing, a bottom channel is formed to the lower side of the filter cartridge and side channel is formed to the filter cartridge radially inward, and the liquid to be filtered, introduced from an inlet, is sent to a bottom channel after being made to pass through said center channel, sent to a side channel from the bottom channel, filtered by being made to pass through a filter member from the side channel to radially inward, and then led to an outlet along the outer periphery of the core member, wherein **characterized in that** a protrusion which supports the inner periphery of the filter member during filtration and a recess which guides the filtered liquid having passed through the filter member radially inward toward the outlet are equipped.

2. The filter unit of claim 1, wherein said recess forms a helical groove.

3. The filter unit of claim 2, wherein the bottom of said groove is in a shape without comers.

4. The filter unit of claim 2 or 3, wherein the inclination angle of said helical groove against the plane perpendicular to the axis of said core member is 40 to 50 degrees.

5. The filter unit of claim 1, wherein the protrusion and recess on outer periphery of said core member is formed using a plurality of molds.

6. A filter cartridge comprising a cylindrical filter member as well as a core member having a center channel and arranged in the center of the filter member, wherein the liquid to be filtered, introduced from the outside, is sent to radially outward of the filter member after being made to pass through the center channel, filtered by being made to pass through a filter member radially inward. It is **characterized in that** it is equipped with the protrusion supporting the inner periphery of said filter member during filtration and the recess guiding the filtered liquid, having passed through the filter member radially inward, toward the outside.
